**Europäisches Patentamt**

**European Patent Office**

**Office européen des brevets**

(11) Numéro de publication: **0014118**
A1

## (12) DEMANDE DE BREVET EUROPEEN

(21) Numéro de dépôt: **80400038.8**

(22) Date de dépôt: **11.01.80**

(51) Int. Cl.³: **B 60 R 1/06**

(30) Priorité: **19.01.79 FR 7901415**

(43) Date de publication de la demande: **06.08.80**
Bulletin 80/16

(84) Etats contractants désignés: **DE GB IT SE**

(71) Demandeur: **Manzoni, Stéphane, 1, rue Pasteur, F-39200 Saint-Claude (FR)**

(72) Inventeur: **Manzoni, Stéphane, 1, rue Pasteur, F-39200 Saint-Claude (FR)**

(74) Mandataire: **Moulines, Pierre et al, Cabinet BEAU de LOMENIE 55, rue d'Amsterdam, F-75008 Paris (FR)**

(54) **Perfectionnement aux dispositifs de commande à distance d'un miroir de rétroviseur pour véhicule.**

(57) Perfectionnement aux dispositifs de commade à distance d'un miroir de rétroviseur réglable à l'intérieur du véhicule au moyen d'une transmission à câbles.

Le corps 1 présente deux paliers 2, 2a dans lesquels est monté pivotant un axe 3 solidaire d'une entretoise 4 qui porte une extrémité d'au moins un câble 17, ladite entretoise présentant au moins un palier dans lequel est monté rotatif, un levier de manœuvre 8 dont l'axe est perpendiculaire à l'axe de pivotement de l'entretoise 4, ledit levier étant solidaire en rotation d'un organe pivotant 11 sur lequel sont montées les extrémités de deux câbles de transmission 13b.

L'invention est utilisée pour la commande à distance des rétroviseurs de véhicules.

<u>Perfectionnement aux dispositifs de commande à distance d'un miroir</u>
<u>de rétroviseur pour véhicule.</u>

La présente invention a pour objet un perfectionnement aux dispositifs de commande à distance d'un miroir pour véhicule.

On connaît des dispositifs de commande à distance d'un miroir de rétroviseur réglable de l'intérieur d'un véhicule, dans lesquels le miroir est monté pivotant dans un boîtier au moyen d'une articulation à rotule reliée par trois câbles de transmission à un moyen de commande constitué par une articulation à rotule munie d'un levier de manoeuvre.

Dans les dispositifs connus le moyen de commande monté de préférence sur la portière ou sur un gousset de portière est constitué principalement d'un corps dans lequel est montée oscillante une rotule sur laquelle sont en appui les extrémités des trois câbles et qui est actionné par un levier de manoeuvre. Toutefois, l'utilisation d'une rotule ne permet pas d'obtenir une démultiplication supérieure de 2 à 1, du fait que le déplacement angulaire possible du levier est d'environ 30°, ce qui permet d'obtenir un déplacement du miroir d'environ 15°.

Les points d'attache des trois câbles sur l'organe de commande et sur le porte-miroir sont tous inscrits sur un même diamètre primitif avec entraxe angulaire entre eux de 120°. Le diamètre primitif des câbles sur l'organe de commande étant d'environ la moitié du diamètre primitif des câbles sur le porte-miroir donne la démultiplication utile. Or, avec une telle démultiplication de 2 à 1, il s'évère que le réglage du miroir est par trop direct et imprécis, notamment pour la commande du mouvement ciel-terre.

La disposition connue qui consiste à utiliser une rotule ne permet pas d'obtenir une réduction du diamètre primitif suivant lequel sont disposés les axes des câbles et, par conséquent, une augmentation du rapport de démultiplication, ainsi qu'il est recherché par l'utilisateur.

Pour parvenir à une autre disposition des axes des câbles, on utilise suivant l'invention un autre dispositif d'articulation.

Conformément à la présente invention, le corps présente deux paliers dans lesquels est monté pivotant un axe solidaire d'une entretoise qui porte une extrémité d'au moins un câble, ladite entretoise présentant au moins un palier dans lequel est monté rotatif un levier de manoeuvre dont l'axe est perpendiculaire à l'axe de pivotement de l'entretoise, ledit levier étant solidaire en rotation d'un organe pivotant sur lequel sont montées les extrémités de deux câbles de transmission qui sont situés du côté opposé au câble solidaire de l'entretoise par rapport à l'axe de pivotement de ladite entretoise.

Cette disposition permet une disposition des câbles de transmission sur l'organe de commande et sur le miroir commandé, qui permet d'augmenter le rapport de démultiplication d'une façon suffisante, notamment de 4 à 1.

D'autres caractéristiques et avantages de l'invention seront mieux compris à la lecture de la description qui va suivre de plusieurs exemples de réalisation et en se référant aux dessins annexés, dans lesquels :

la figure 1 est une vue en élévation latérale d'un mode de réalisation du dispositif de commande à distance d'un miroir de rétroviseur ;

la figure 2 est une vue en coupe suivant la ligne II-II de la figure 1 ;

la figure 3 est une vue de dessus et en coupe partielle du dispositif représenté à la figure 1 ;

la figure 4 est une vue en coupe suivant la ligne IV-IV de la figure 2 ;

la figure 5 est une vue en coupe suivant la ligne V-V de la figure 1 ;

la figure 6 est une vue en plan de l'organe de butée des gaines de câbles ;

la figure 7 est une vue en coupe d'un autre mode de réalisation du dispositif suivant la ligne VII-VII de la figure 9 ;

la figure 8 est une vue en coupe suivant la ligne VIII-VIII de la figure 7 ;

la figure 9 est une vue en élévation frontale du mode de réalisation du dispositif représenté à la figure 7 ;

la figure 10 est une vue en coupe suivant la ligne X-X de la figure 7 ;

la figure 11 est une même vue en coupe qu'à la figure 7 avec une variante de réalisation ;

la figure 12 est une même vue en coupe qu'à la figure 7 d'une autre variante de réalisation ;

les figures 13 et 13a sont des vues schématiques de la position des axes des câbles sur le porte-miroir et sur l'organe de commande dans les dispositifs connus ;

les figures 14, 14a et 14b sont des vues schématiques de la position des axes des câbles modifiée suivant l'invention ;

la figure 15 est une vue en coupe longitudinale suivant un plan latéral d'un autre mode de réalisation du dispositif comportant un organe basculeur ;

la figure 16 est une vue en coupe longitudinale suivant un plan axial du dispositif représenté à la figure 15 ;

la figure 17 est une vue en coupe suivant la ligne XVII-XVII de la figure 15 ; et

la figure 18 est une même vue en coupe qu'à la figure 17 après une rotation du levier.

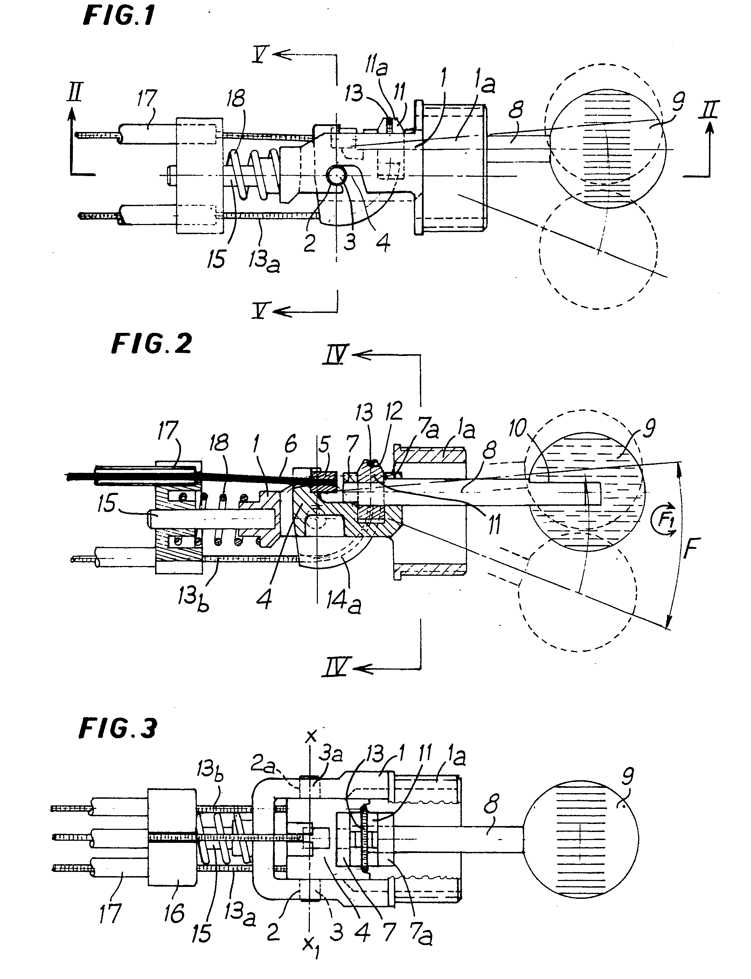

Aux figures 1, 2 et 3, on a représenté un mode de réalisation d'un dispositif de commande à distance d'un miroir de rétroviseur et qui comprend un corps 1 présentant un manchon fileté 1a par lequel il est fixé sur l'embase du rétroviseur (non représenté au dessin) au moyen d'un écrou non représenté, laquelle embase est fixée à montage dit sur gousset sur triangle de la portière. Sur le corps 1, il est prévu deux paliers 2, 2a dans lesquels sont engagés deux tourillons 3, 3a disposés suivant un axe $XX_1$ et solidaires d'une entretoise 4 (figure 1, 3 et 5) sur laquelle est en appui un bossage 5 d'un câble de transmission 6.

L'entretoise 4 comporte deux paliers 7, 7a dans lesquels est montée rotative l'une des extrémités d'un levier de manoeuvre 8 qui est muni à son autre extrémité d'un bouton de manoeuvre 9 solidaire dudit levier par un méplat 10. Entre les paliers 7, 7a est disposé un organe semi-circulaire 11 qui présente une gorge 12 dans laquelle est monté un câble 13 qui correspond en fait à la liaison des extrémités des câbles 13a, 13b. L'axe du levier de manoeuvre 8 est perpendiculaire à l'axe $XX_1$ de pivotement de l'entretoise 4 qui comporte des gorges 14, 14a de forme partiellement circulaire pour le guidage des câbles 13a, 13b qui sont parallèles.

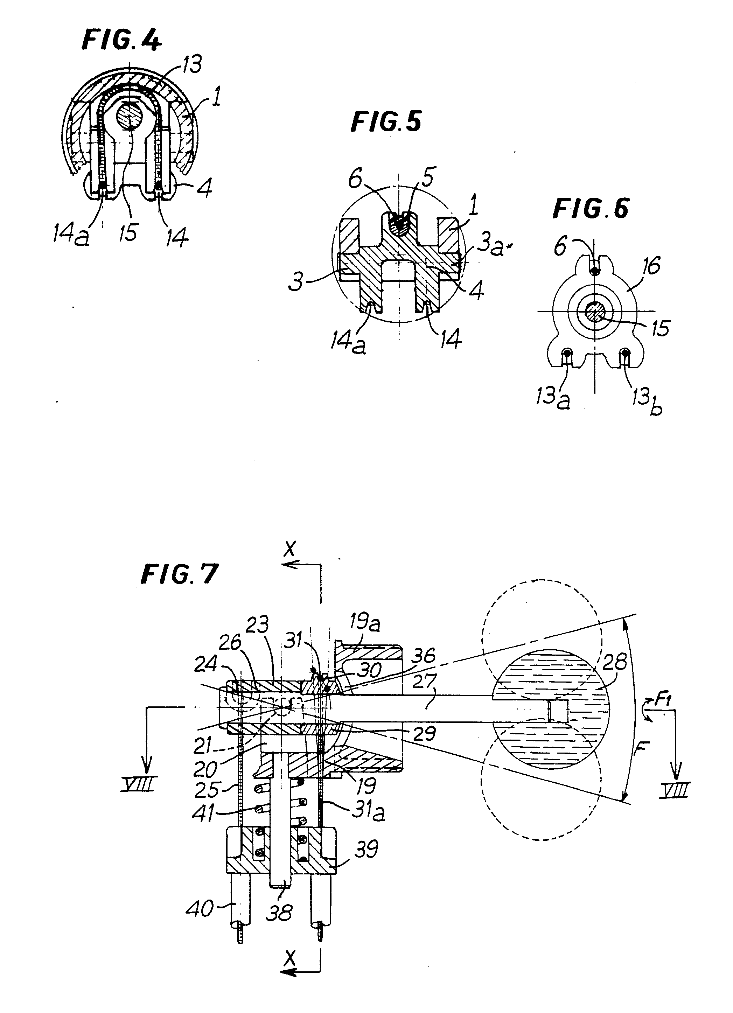

A l'extrémité du corps 1 opposé au levier 8, celui-ci comporte une tige 15 sur laquelle est monté coulissant un organe de butée 16 (figures 2 et 6) contre lequel viennent en appui les gaines 17 des câbles 6, 13a et 13b. Pour maintenir la tension des câbles, un ressort hélicoïdal 18 est disposé entre le corps 1 et l'organe de butée 16.

Le dispositif suivant l'invention fonctionne de la manière suivante.

Pour obtenir un déplacement ciel-terre du miroir, on fait pivoter le levier 8 dans les paliers 7, 7a autour de son axe et on entraîne ainsi en rotation l'organe semi-circulaire à gorge 11 et, par suite, la partie 13 des deux câbles 13a, 13b, qui sont reliés à des points correspondants du porte-miroir, la partie 13 du câble étant sertie dans la gorge 11.

Pour le déplacement de gauche à droite et inversement du miroir, on agit sur le levier 8 pour déplacer celui-ci suivant la flèche F, de telle sorte que le pivotement de l'entretoise s'effectue suivant l'axe $XX_1$ des tourillons 3, 3a. La câble 6 et les câbles 13a, 13b, étant situés de part et d'autre de l'axe $XX_1$, il en résulte un déplacement correspondant du porte-miroir qui est relié aux câbles de manière correspondante.

Aux figures 7, 8 et 9, on a représenté un autre mode de réalisation du dispositif de commande 19 dans lequel le levier au point moyen 0 est perpendiculaire aux câbles de transmission. Le dispositif comprend un corps 19 qui est muni d'un manchon fileté 19a dont l'axe est perpendiculaire à l'axe du corps et qui assure à l'intérieur la fixation sur une portière du véhicule au moyen d'un écrou, non représenté au dessin.

Le corps 1 comporte deux pattes 20, 20a qui présentent à leur partie supérieure des paliers 21, 21a dans lesquels sont montés pivotants des tourillons 22, 22a solidaires d'une entretoise 23 qui pivote autour d'un axe $XX_1$. Sur l'entretoise 23 est en appui par un bossage 24 l'un des câbles 25. Par ailleurs, l'entretoise 23 présente un alésage 26 dans lequel est monté pivotant le levier 27 qui porte, à l'une de ses extrémités, un bouton de manoeuvre 28, ledit levier étant monté pivotant suivant un axe perpendiculaire à l'axe $XX_1$. Sur le levier 27 est clavetée une poulie 29 présentant une gorge circulaire 30 dans laquelle est engagé un câble 31 qui correspond en fait à la liaison des extrémités des câbles 31a, 31b, ledit câble 31 étant serti dans la gorge au moyen de bossages 29a.

Suivant un mode de réalisation particulier de l'invention représenté à la figure 11, le câble 31 est solidaire d'un bossage 32 qui est maintenu entre deux organes de butée 33, 33a solidaires de la poulie 29.

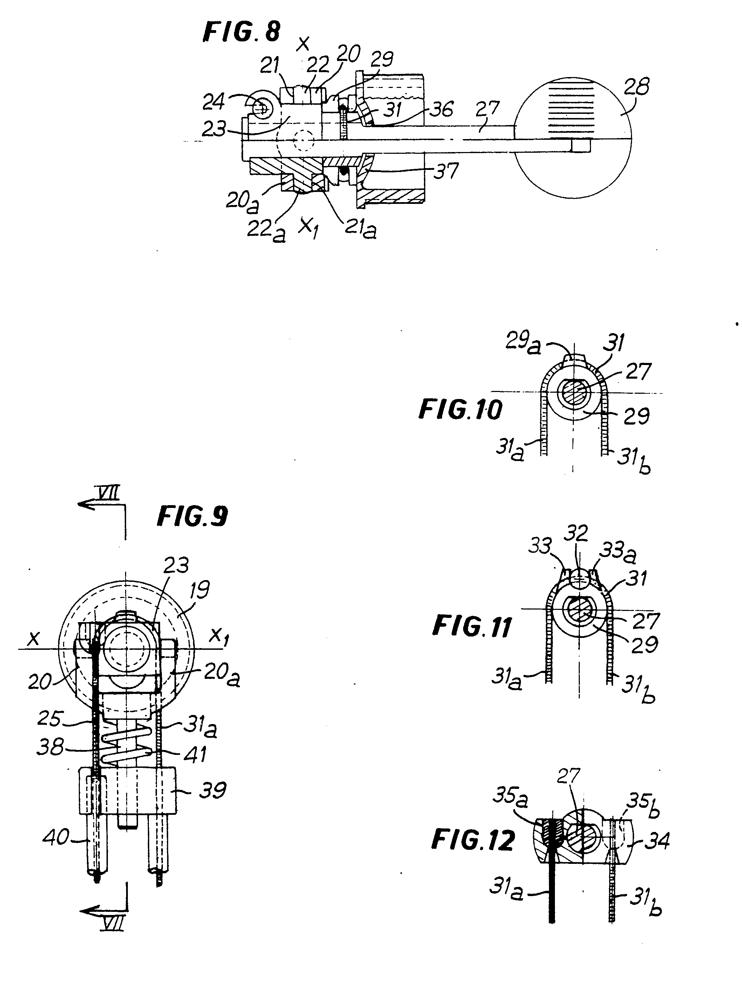

A la figure 12, on a représenté un autre mode de fixation des câbles 31a, 31b, dans lequel on utilise un palonnier 34 qui est claveté dans sa partie médiane sur le levier 27, afin d'être entraîné en rotation par celui-ci et qui présente, de chaque côté de l'axe du levier 27, des logements dans lesquels sont engagés des embouts 35a, 35b solidaires des extrémités des câbles 31a, 31b. Le levier 27 est guidé dans une rainure 36 ménagée dans une paroi 37 (figures 7, 8) prévue sur le manchon 19a, ladite rainure assurant un guidage axial suivant la flèche F et permettant la rotation du levier suivant la flèche $F_1$.

Sur le corps 19 et perpendiculairement au levier 27 est fixée une tige 38 sur laquelle est monté coulissant un organe de butée 39 traversé par les câbles de transmission et contre lequel est en appui l'extrémité des gaines 40, un ressort 41 étant disposé entre le corps 19 et l'organe de butée 39.

Le fonctionnement du dispositif dans le cas des figures 7, 8 et 9 est identique à celui des figures 1, 2 et 3, c'est-à-dire que le déplacement ciel-terre s'effectue au moyen des câbles 31, 31a et que le déplacement gauche, droite s'effectue au moyen des câbles 25 d'une part, et 31a, 31b d'autre part.

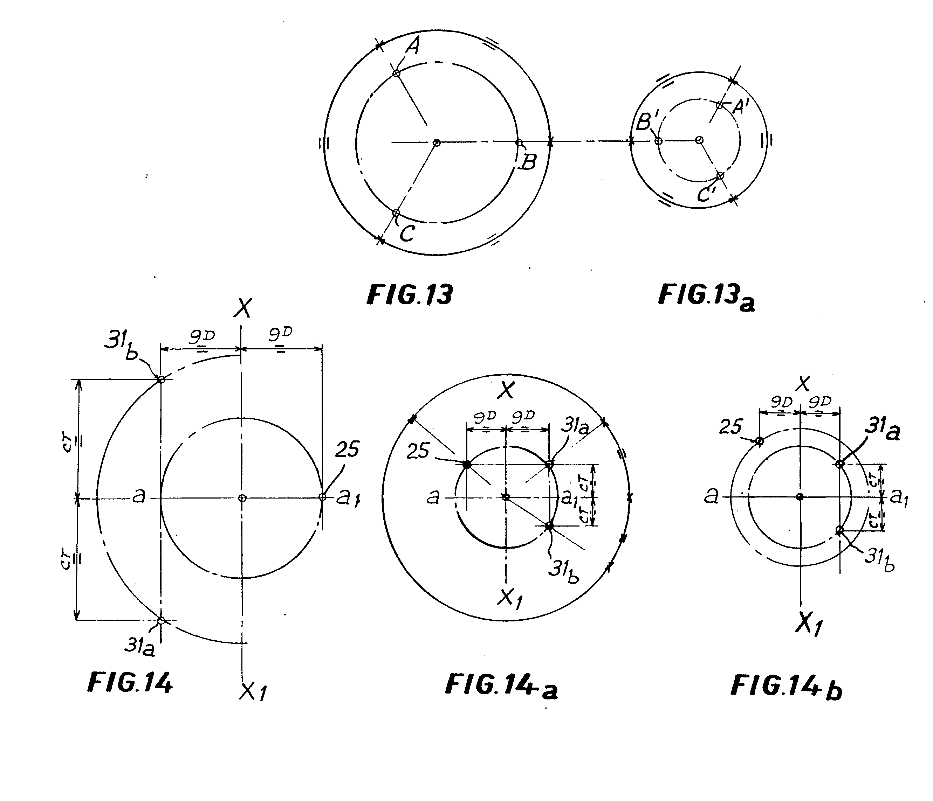

Aux figures 13, 13a on a représenté un mode de réalisation des points d'attache des trois câbles représentés en 13 sur le porte-miroir par les points A, B, C et en 13a sur l'organe de commande par les points A', B', C'. Les points d'attache des trois câbles sont tous inscrits sur un même diamètre primitif avec entraxe angulaire entre eux de 120°. Le diamètre primitif des câbles sur l'organe de commande étant d'environ la moitié du diamètre primitif sur le porte-miroir, il en résulte qu'un déplacement angulaire du levier d'approximativement 30° permet d'obtenir un déplacement de 15° environ du miroir, soit une démultiplication de 2 à 1. Or, par un positionnement différent des câbles sur l'organe de commande représenté aux figures 14a, 14b, il est possible d'obtenir un rapport de démultiplication plus grand notamment de 4 à 1. Les trois axes de sortie des câbles de transmission 25, 31a, 31b sont inscrits sur le même diamètre primitif et les deux axes des câbles 31, 31a, commandant le mouvement ciel-terre, sont disposés symétriquement de part et d'autre d'un axe $aa_1$, alors que l'axe du troisième câble 25 commandant avec les câbles 31, 31a le mouvement gauche, droite est disposé symétriquement à l'axe de l'un desdits câbles 31, 31a précédents par rapport à un axe $XX_1$ perpendiculaire à l'axe $aa_1$.

Suivant un autre mode de réalisation représenté à la figure 14b, le troisième axe de sortie 25 est situé sur un diamètre primitif différent des deux autres axes de sortie ; par contre, les axes 31a, 31b sont situés à égale distance de l'axe $aa_1$ et sur le même diamètre primitif.

A la figure 14, on a représenté les points d'attache des câbles 31a, 31b commandant le mouvement "ciel-terre" sur le porte-miroir qui sont à une distance CT quadruple du rayon CT de l'organe de commande représenté aux figures 14a, 14b. De ce fait un déplacement angulaire de 60° du bouton de commande provoque un déplacement angulaire du miroir de 15°, soit une démultiplication satisfaisante de réglage précis dans le rapport de 4 à 1.

Plus le rayon CT de l'organe de commande est petit et plus le rayon CT de l'organe commandé est grand, plus la démultiplication est grande.

Par contre, en ce qui concerne l'autre mouvement gauche, droite, la distance GD de l'organe de commande peut être conservée comme actuellement où il est égal à la moitié de la distance GD de l'organe commandé ; pour un déplacement angulaire de 30°

0014118

de l'organe de commande, on obtient un débattement angulaire de 15° du miroir.

Avec ce procédé il est possible, en modifiant les rayons CT et GD de l'organe de commande et de l'organe commandé, d'obtenir des démultiplications différentes désirées, ce qui n'est pas possible avec les organes de commande connus.

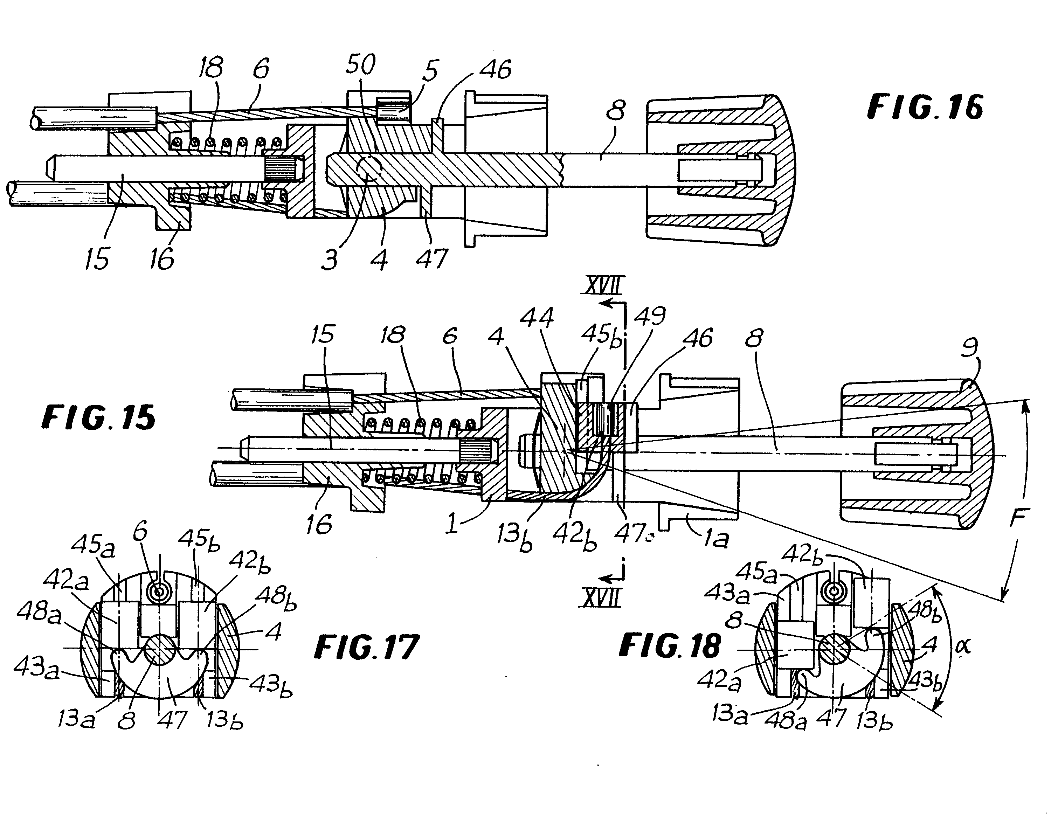

Aux figures 15, 16, 17 et 18 on a représenté une variante de réalisation dans laquelle les câbles 13a, 13b sont munis à leurs extrémités de bossages 49 qui sont engagés respectivement, et en appui dans des coulisseaux quadrangulaires 42a, 42b montés coulissants dans des glissières 43a, 43b ménagées dans l'entretoise 4. Les coulisseaux 42a, 42b présentent des nervures 44 qui sont engagées dans des rainures de guidage 45a, 45b de l'entretoise, lesdits coulisseaux étant maintenus dans les glissières par l'une de leurs faces contre une joue 46 solidaire du levier de manoeuvre 8.

La tige de manoeuvre 8 est solidaire d'un organe basculeur 47 dont les doigts 48a, 48b sont respectivement en contact avec les coulisseaux 42a, 42b (figures 17, 18).

Le câble 6 est fixé au moyen d'un bossage 5 sur l'entretoise 4 de la même manière qu'à la figure 2 et ladite entretoise est articulée autour de l'axe 3 sur le corps 1.

Pour obtenir un déplacement ciel-terre du miroir, on fait pivoter le levier 8 dans l'alésage 50 de l'entretoise 4 et on entraîne ainsi en rotation l'organe basculeur 47 qui peut se déplacer suivant un angle α (figure 18), et agit par ses doigts 48a, 48b sur les coulisseaux 42a, 42b qui se déplacent dans les glissières 43a, 43b en entraînant les câbles 13a, 13b reliés à des points correspondants du miroir.

Pour le déplacement de gauche à droite et inversement du miroir, on agit sur le levier 8 pour déplacer celui-ci suivant la flèche F, de telle sorte que le pivotement de l'entretoise 4 s'effectue suivant l'axe 3. Le câble 6 et les câbles 13a, 13b étant situés de part et d'autre de l'axe 3, il en résulte un déplacement correspondant du porte-miroir qui est relié aux câbles de manière corres- pondante.

8     0014118

Bien entendu diverses modifications peuvent être apportées par l'homme de l'art aux dispositifs ou procédés qui viennent d'être décrits uniquement à titre d'exemples non limitatifs, sans sortir du cadre de l'invention.

0014118

R E V E N D I C A T I O N S
----------------------------

1.          Perfectionnement aux dispositifs de commande à distance
d'un miroir de rétroviseur réglable de l'intérieur du véhicule au
moyen d'une transmission à câbles, comprenant un corps dans lequel
les câbles sont guidés parallèlement à l'axe longitudinal du corps
fixé sur la portière du véhicule, caractérisé en ce que le corps présente deux paliers dans lesquels est monté pivotant un axe solidaire
d'une entretoise qui porte une extrémité d'au moins un câble, ladite
entretoise présentant au moins un palier dans lequel est monté rotatif un levier de manoeuvre dont l'axe est perpendiculaire à l'axe de
pivotement de l'entretoise, ledit levier étant solidaire en rotation
d'un organe pivotant sur lequel sont montées les extrémités de deux
câbles de transmission qui sont situés du côté opposé au câble solidaire de l'entretoise par rapport à l'axe de pivotement de ladite
entretoise.

2.          Perfectionnement aux dispositifs suivant la revendication 1, caractérisé en ce que l'organe pivotant monté sur le levier
de manoeuvre est constitué d'une pièce semi-circulaire présentant une
gorge dans laquelle est engagé et fixé un câble constitué par les deux
brins réunis des deux câbles de transmission.

3.          Perfectionnement suivant la revendication 2, caractérisé en ce que le câble disposé dans la gorge de la pièce semi-circulaire est muni d'un bossage maintenu prisonnier entre deux ergots
solidaires de ladite pièce semi-circulaire.

4.          Perfectionnement suivant la revendication 1, caractérisé en ce que l'organe pivotant monté sur le levier de manoeuvre est
constitué d'un palonnier dont les deux bras constituent des appuis
pour les bossages solidaires des deux extrémités des câbles de
manoeuvre.

5.          Perfectionnement suivant la revendication 1, caractérisé en ce que le levier de manoeuvre situé au point moyen est parallèle aux axes des câbles et le corps est fixé directement sur le
rétroviseur.

6.         Perfectionnement suivant la revendication 5, caractérisé en ce que les deux câbles montés sur l'organe pivotant solidaire du levier de manoeuvre sont guidés à la sortie dudit organe par des gorges semi-circulaires prévues sur l'entretoise.

7.         Perfectionnement suivant la revendication 1, caractérisé en ce que le levier de manoeuvre situé au point moyen est perpendiculaire aux axes des câbles de transmission et le corps présente un prolongement latéral par lequel il est fixé sur la portière du véhicule, ledit prolongement présentant une rainure dans laquelle est monté coulissant et pivotant le levier de manoeuvre.

8.         Perfectionnement suivant la revendication 1, caractérisé en ce que le corps est muni d'une tige sur laquelle est monté coulissant l'organe de butée qui est traversé par les câbles de transmission et contre lequel sont en appui les gaines desdits câbles contre l'action d'un organe élastique disposé entre ledit organe et le corps.

9.         Perfectionnement suivant l'une quelconque des revendications 1 à 8, caractérisé en ce que les trois axes de sortie des câbles de transmission sont inscrits sur le même diamètre primitif et les deux axes des câbles montés sur l'organe pivotant commandant le mouvement ciel-terre sont disposés symétriquement de part et d'autre d'un axe $aa_1$ alors que l'axe du troisième câble, commandant avec les câbles précédents le mouvement gauche droite, est disposé symétriquement à l'axe de l'un desdits câbles précédents par rapport à un axe $XX_1$ perpendiculaire à l'axe $aa_1$.

10.        Perfectionnement suivant la revendication 9, caractérisé en ce que le troisième câble a son axe de sortie situé sur un diamètre primitif différent du diamètre primitif des axes des deux premiers câbles, et l'axe des deux câbles situé sur un même diamètre primitif à égale distance de l'axe $aa_1$.

11.        Perfectionnement suivant la revendication 1, caractérisé en ce que l'organe pivotant monté sur le levier de manoeuvre est constitué d'un organe basculeur présentant deux doigts situés de part et d'autre de l'axe de rotation du levier et qui sont en contact avec deux coulisseaux se déplaçant dans des glissières correspondantes prévues dans l'entretoise, lesdits coulisseaux constituant des appuis pour les bossages solidaires des deux extrémités des câbles de manoeuvre.

12.        Perfectionnement suivant la revendication 11, caractérisé en ce que chaque coulisseau de section quadrangulaire est disposé dans une glissière ménagée dans l'entretoise et maintenu d'un côté par le basculeur, lesdits coulisseaux présentant une nervure qui est engagée dans une rainure de guidage prévue dans l'entretoise.

**FIG.1**

**FIG.2**

**FIG.3**

FIG.4

FIG.5

FIG.6

FIG.7

**FIG.8**

**FIG.10**

**FIG.9**

**FIG.11**

**FIG.12**

**FIG.13**

**FIG.13a**

**FIG.14**

**FIG.14a**

**FIG.14b**

FIG. 16

FIG. 15

FIG. 17

FIG. 18

5/5

0014118

**Office européen des brevets**

**RAPPORT DE RECHERCHE EUROPEENNE**

0014118

Numéro de la demande

EP 80 40 0038

## DOCUMENTS CONSIDERES COMME PERTINENTS

| Catégorie | Citation du document avec indication, en cas de besoin, des parties pertinentes | Revendica-tion concernée |
|---|---|---|
| A | FR - A - 2 389 514 (LAFONT) <br> * Page 5, lignes 4-21; figure 1 * | 1,7 |
| A | US - A - 3 712 149 (VAN NOORD) <br> * Figures 4,5; revendication 1 * | 1,5 |
| A | US - A - 4 103 560 (STOFFEL) <br> * Figures 10,11; revendication 1 *[7] | 1,4,5,7 |
| A | FR - A - 1 552 228 (TUGONIA) <br> * Résumé; figures 4-6 * | 1,7 |
| A | US - A - 3 474 686 (LIEDEL) <br> * Revendication 1; figure 3 * | 1 |
| A | US - A - 3 552 228 (SHRODE) <br> * Revendication 1; figure 2 * | 7 |

----

**CLASSEMENT DE LA DEMANDE (Int. Cl. 3)**

B 60 R 1/06

**DOMAINES TECHNIQUES RECHERCHES (Int. Cl. 3)**

B 60 R 1/06

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 03-03-1980 | SCHMITTER |

OEB Form 1503.1   06.78